# EUROPÄISCHE PATENTSCHRIFT

(11) **EP 0 689 708 B1**
(45) Veröffentlichungstag und Bekanntmachung des Hinweises auf die Patenterteilung: **17.09.1997**
(21) Anmeldenummer: 94911869.9
(22) Anmeldetag: 08.03.1994
(51) Int. Cl.: G11B 7/00, G11B 7/135

(54) **KOMPATIBLES AUFZEICHNUNGS- UND/ODER WIEDERGABEGERÄT**
COMPATIBLE RECORDING AND/OR PLAYBACK DEVICE
APPAREIL COMPATIBLE D'ENREGISTREMENT ET/OU DE LECTURE

(30) Priorität: 17.03.1993 DE 4308531
(43) Veröffentlichungstag der Anmeldung: 03.01.1996
(73) Patentinhaber: DEUTSCHE THOMSON-BRANDT GMBH, 78048 Villingen-Schwenningen (DE)
(72) Erfinder: ZUCKER, Friedhelm, D-78052 Villingen-Schwenningen (DE)
(86) Internationale Anmeldenummer: EP9400699
(87) Internationale Veröffentlichungsnummer: WO9422138

(56) Entgegenhaltungen:
- EP-A- 0 136 574
- EP-A- 0 465 676
- EP-A- 0 482 964
- EP-A- 0 525 896
- EP-A- 0 558 052
- PATENT ABSTRACTS OF JAPAN vol. 13, no. 563 (P-975) 14. Dezember 1989 & JP,A,01 235 032 (MATSUSHITA) 20. September 1989

## Beschreibung

Die Erfindung betrifft ein Verfahren und eine Anordnung für ein kompatibles Aufzeichnungs- und/oder Wiedergabegerät zur Informationswiedergabe von und/oder Aufzeichnung auf unterschiedliche Informationsspeicherdichte aufweisende optische Informationsträger. Das kompatible Aufzeichnungs- und/oder Wiedergabegerät ermöglicht sowohl die Informationswiedergabe von und/oder das Aufzeichnen auf bisher übliche optische Informationsträger in Form der standardisierten CD, Minidisk oder MOD als auch von und/oder auf optische Informationsträger, die eine vergleichsweise höhere Informationsspeicherdichte bzw.geringere Spurabstände und geringere Ausdehnungen der Pits bzw. Speicherstrukturen aufweisen.

Informationen sind auf der CD bzw. Compact Disc in digitaler Form als Spiralspur aufeinanderfolgender Vertiefungen, den sogenannten Pits, aufgezeichnet. Der Spurabstand optischer Informationsträger gegenwärtiger Norm beträgt 1,6µm und die Pits weisen eine Breite von 0,6 µm sowie eine Tiefe von 0,12 µm auf und die Länge eines Pits oder der Abstand zwischen zwei Pits variiert im Bereich zwischen 0,9 und 3,3 µm, vgl. Philips tech. Rev.40, 1982, No.6, S.156. Diese Standardwerte sind auch für die Minidisk zutreffend. Das höhere Speichervermögen der Minidisk wird nicht durch eine höhere Speicherdichte des Informationsträgers sondern durch das Komprimieren der Informationen vor der Aufzeichnung erreicht. Die Minidisk stimmt hinsichtlich des Aufbaus des Informationsträgers mit den CD-Standardwerten überein, so daß sich entsprechende Abspielgeräte hinsichtlich des verwendeten Lasers und der Abtasteinrichtung nicht unterscheiden. Der Datenkompression ohne Informationsverlust sind jedoch natürliche Grenzen gesetzt, so daß man bestrebt ist, die Speicherkapazität des Informationsträgers zu erhöhen. Dies bedingt jedoch einen geringeren Spurabstand und/oder Pits mit geringeren Abmessungen. Folglich sind auch Abspielgeräte neuen Typs erforderlich, die das optische Abtasten und die Informationswiedergabe von Informationsträgern größerer Speicherdichte ermöglichen. Zum optischen Abtasten und/oder Aufzeichnen von Pits geringerer Abmessungen und mit geringerem Spurabstand ist es notwendig, den Laserstrahl auf der CD mit geringerer Lichtfleckgröße zu fokussieren. Dabei wird die Größe des Lichtfleckes sowohl von der numerischen Apertur der Objektivlinse als auch von der Wellenlänge des Laserlichtes bestimmt und so kann ein geringerer Lichtfleckdurchmesser bzw. eine geringere Lichtfleckgröße durch die Verwendung einer Lichtquelle geringerer Wellenlänge erreicht werden. Gegenwärtige verwendete Laser weisen eine Wellenlänge von 780 nm auf. Es sind jedoch bereits Laser bekannt, die Licht mit einer Wellenlange von nur 680 nm bereitstellen. Ein quantitativer Sprung wird von optischen Frequenzverdopplern, sogenannten Second Harmonic Generator Crystals, erwartet. Sie ermöglichen eine Halbierung der Wellenlänge. Der dabei auftretende Leistungsverlust kann durch eine höhere Laserleistung ausgeglichen werden. Die Verwendung eines kleineren Lichtfleckes bzw. einer Lichtquelle geringere Wellenlänge zur Abtastung optischer Informationsträger würde jedoch dazu führen, daß mit derartigen Geräten Informationsträger gegenwärtiger CD-Norm nicht abspielbar sind. Grund dafür ist das zur Abtastung verwendete Prinzip der destruktiven Interferenz. Das Prinzip der destruktiven Interferenz besteht darin, daß eine optische Abtastung der Pits, die lediglich von Vertiefungen einer gleichmäßig reflektierenden Schicht gebildet werden, dadurch erreicht wird, daß der abtastende Lichtfleck derart fokussiert wird, daß der außerhalb eines Pits reflektierte Lichtanteil annähernd gleich dem von der Vertiefung reflektierten Lichtanteil ist und die Lichtanteile sich durch destruktive Interferenz auslöschen, so daß eine Abschwächung der Intensität als Abtastsignal ausgewertet werden kann. Es besteht ein zwischen Pit- bzw. Speicherstrukturgröße und Lichtfleckgröße einzuhaltendes Abhängigkeitsverhältnis. Dies ist teilweise auch für einen magneto-optischen Informationsträger, der sogenannten MOD, zutreffend, bei dem die Informationsspeicherung bzw. -wiedergabe im wesentlichen auf dem Drehen der Polarisationsrichung des Lichtes beruht. Obwohl das Verhältnis zwischen der Größe magnetischer Domänen und der Lichtfleckgröße nicht mit der für Pits zutreffenden Genauigkeit eingehalten werden muß, ist auch hier bei Informationsträgern unterschiedlicher Speicherdichte, insbesondere hinsichtlich Informationsträger mit verringertem Spurabstand, ein gewisses Abhängigkeitsverhältnis zu berücksichtigen.

Zur Defokussierung des auf den Informationsträger gerichteten Lichtstrahls ist es gemäß EP-A-136574 bereits bekannt, auf den Strahlengang im Aufzeichnungs- und/oder Wiedergabegerät dadurch einzuwirken, daß eine Offsetspannung im Fokusregelkreis zur Anpassung an die Speicherdichte des Informationsträgers als Defokussiermittel verwendet wird. Zur Durchführung des Verfahrens ist im an den Fotodetektor angeschlossen Fokusregelkreis eine Offsetspannungsquelle als Defokussierungsmittel vorgesehen. Aufgrund des dem Fokusfehlersignal hinzugefügten Offsets wird die den Lichtstrahl auf den Informationsträger fokussierende Objektivlinse mit dem Fokusregelkreis in eine Stellung gebracht, die zu einem vergrößerten Lichtfleck auf dem Informationsträger führt und dadurch zur Abtastung- und/oder Aufzeichnung von Informationen mit einem Informationsträger geringerer Speicherdichte verwendet werden kann. Diese Defokussierung wird dadurch erreicht, das der Fokusregelkreis eines Aufzeichnungs- und oder Wiedergabegerätes die Objektivlinse in eine Position führt, bei der ein vom Informationsträger auf den Fotodetektor reflektierter Lichtfleck hinsichtlich der den Fotodetektor bildenden Fotodioden bzw. Fotosegmente symmetrisch ist. Da dem Fokusfehlersignal jedoch eine Offsetspannung hinzugefügt wurde entspricht dies einer von der Fokussierung abweichenden Position. Einer dadurch eintretenden Verschiebung des Arbeitspunktes kann durch entsprechende Dimensionierung der im Strahlengang ebenfalls bei bekannten Aufzeichnungs- und/oder Wiedergabegeräten verwendeten Zylinderlinse entgegengewirkt werden.

Ferner ist es gemäß JP-A-1235032 bekannt, eine für die höchste Speicherdichte hinsichtlich Wellenlänge und Lichtfleckgröße angepaßte Lichtquelle zu verwenden und den Lichtfleck für eine niedrigere Speicherdichte zu vergrößern.

Es ist deshalb Aufgabe der Erfindung, ein hinsichtlich Informationsträger unterschiedlicher Speicherdichte kompatibles Aufzeichnungs- und/oder Wiedergabegerät für optische Informationsträger trotz eines zwischen Pit-bzw. Domänen- und Lichtfleckgröße einzuhaltenden Abhängigkeitsverhältnises zu schaffen, das einen Licht einer Wellenlänge emittierenden Laser und eine Objektivlinse vorgegebenen Brennweite aufweist.

Diese Aufgabe wird mit den in den Ansprüchen 1 und 4 angegebenen Merkmalen gelöst. Vorteilhafte Weiterbildungen sind in den Unteransprüchen angegeben.

Obwohl eine Defokussierung des einen optischen Informationsträger abtastenden oder im Sinne einer Informationsaufzeichnung beschreibenden Lichtstrahls bei bekannten Aufzeichnungs- und Wiedergabegeräten zu einer Verformung des auf den Fotodetektor vom Informationsträger reflektierten Lichtfleckes führt und unverzüglich durch den Fokusregelkreis ausgeregelt wird, geht die Erfindung in vorteilhafter Weise davon aus, eine Defokussierung des Abtast- und/oder Aufzeichnungsstrahls für ein kompatibles Aufzeichnungs- und/oder Wiedergabegerät zu verwenden, um in einem Gerät optische Informationsträger unterschiedlicher Generationen beziehungsweise unterschiedlicher Speicherdichte verwenden zu können. Insbesondere das Bestreben, die auf einen Informationsträger speicherbare Informationsmenge zu erhöhen, führt zu Informationsträgern höherer Speicherdichte beziehungsweise Speicherstrukturen geringerer Abmessungen. Wie bereits erwähnt, sind Mittel bekannt, die das Realisieren CD- und MOD- ähnlicher Informationsträger höherer Speicherdichte sowie entsprechender Aufzeichnungs- und Wiedergabegeräte ermöglichen. Die Erfindung dient in diesem Zusammenhang insbesondere dazu, die sich aus einer vermuteten Inkompatibilität zu bisher verwendeten Informationsträgern ergebende Hemmschwelle zur Einführung einer Informationsträger höherer Speicherkapazität verwendenden Gerätegeneration zu überwinden. Es werden ein Verfahren und eine Anordnung angegeben, die es in nur einem Gerät ermöglichen, sowohl Informationsträger mit einer der gegenwärtigen Norm entsprechenden Speicherdichte als auch Informationsträger höherer Speicherdichte zu verwenden. Dies wird mit einem kompatiblen Aufzeichnungs- und/oder Wiedergabegerät erreicht, das derart hergestellt ist, daß eine an die höchste Speicherdichte zu verwendender Informationsträger hinsichtlich Wellenlänge und Lichtfleckgröße angepaßte Lichtquelle verwendet und mit einem Defokussiermittel das auf den Informationsträger gerichtete Licht zur Lichtfleckvergrößerung bei Verwendung von Informationsträgern geringerer Speicherdichte defokussiert wird. Das zwischen der Speicherelementgröße und der Lichtfleckgröße bestehende Abhängigkeitsverhältnis kann dadurch auch bei unterschiedlichen Speicherelementgrößen eingehalten werden.
Um auf den Strahlengang im Aufzeichnungs- und/oder Wiedergabegerät in der beabsichtigten Weise einzuwirken, werden weder ein Licht einer anderen Wellenlänge bereitstellender Laser noch eine Objektivlinse mit veränderter numerischer Apertur verwendet.

Zum Herstellen eines kompatiblen Aufzeichnungs- und/oder Wiedergabegerätes wird als Defokussiermittel ein die optische Weglänge im Strahlengang vor dem Fotodetektor verlängerndes Mittel verwendet. Dies kann beispielsweise eine Glasplatte oder eine Linse sein. Das Einfügen einer Glasplatte in den Strahlengang ist gegenüber einer beispielsweise veränderten Zylinderlinse vorteilhaft, da Veränderungen der Position der Zylinderlinse mit einer Arbeitspunktverschiebung verbunden sind. Durch Einwirkung auf den Strahlengang im Sinne einer Verlängerung der optischen Weglänge aufgrund des von Luft sich unterscheidenden Brechungsindexes der Glasplatte im Strahlengang vor dem Fotodetektor, wird ebenfalls infolge der Wirkung des Fokusregelkreises eine zur Anpassung an unterschiedliche Informationsträger geeignete Defokussierung der Objektivlinse bzw. Lichtfleckvergrößerung erreicht.

Es sind somit in vorteilhafter Weise kompatible Aufzeichnungs- und/oder Wiedergabegeräte herstellbar, die zum Betrieb mit Informationsträgern unterschiedlicher Speicherdichte geeignet sind.

Nachfolgend wird die Erfindung anhand von Ausführungsbeispielen in Zeichnungen näher erläutert. Es zeigen:
- Fig.1: Prinzipskizze von hier wesentlichen Elementen eines Aufzeichnungs- und/oder Wiedergabegerätes für plattenförmige optische Informationsträger,
- Fig.2: Prinzipskizze zu Lichtfleckabbildungen auf dem Fotodetektor
- Fig.3: Prinzipskizze zur Offsetanschaltung an einen Fokusregelverstärker gemäß Stand der Technik,
- Fig.4: Prinzipskizze zur Fokusregelkreiskurve und
- Fig.5: Prinzipskizze zur optischen Wegverlängerung.

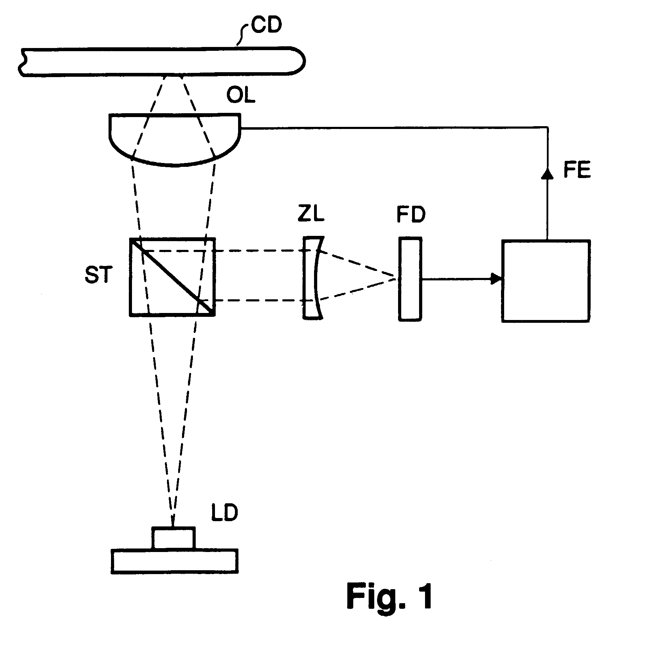

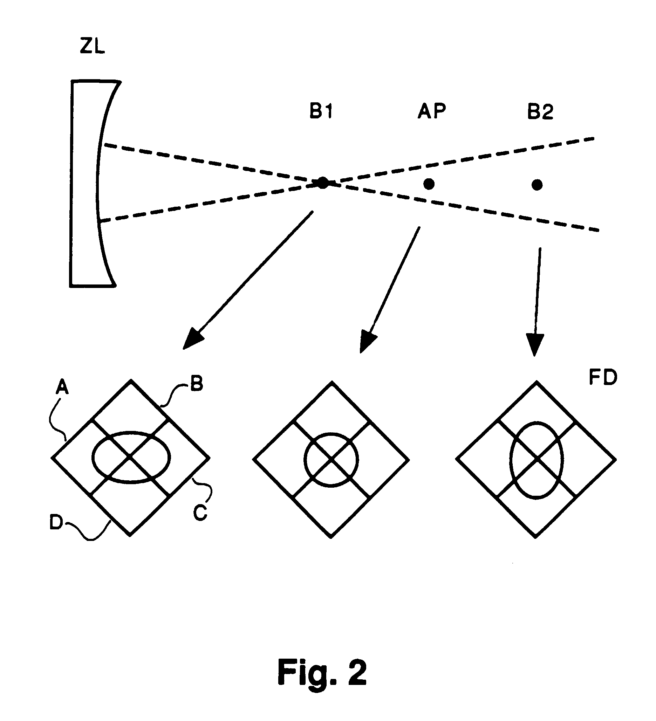

Gemäß der in Fig.1 dargestellten Prinzipskizze eines Aufzeichnungs- und/oder Wiedergabegerätes für plattenförmige optische Informationsträger CD enthält ein Aufzeichnungs- und/oder Wiedergabegerät eine Laserdiode LD, deren emittiertes Licht über einen Strahlteiler ST und eine Objektivlinse OL auf einem optischen Informationsträger CD fokussiert wird. Vom optischen Informationsträger CD wird das Licht reflektiert und gelangt wiederum über die Objektivlinse OL und den Strahlteiler ST sowie über eine Zylinderlinse ZL auf einen Fotodetektor FD, mit dem das detektierte optische Signal in ein bzw. mehrere elektrische Signale umgewandelt wird. Neben einem Spurführungssignal und einem Informationssignal werden Signale zur Regelung der Fokussierung des Abtast- und/oder Aufzeichnungsstrahls bereitgestellt, die einem Fokusregelverstärker FR zur Bildung eines Fokusfehlersignals FE zugeführt werden, mit dem die Objektivlinse OL mittels eines nicht dargestellten Aktuators in einem zur Fokussierung erforderlichen Abstand zum Informationsträger CD positioniert wird, der den Arbeitspunkt AP darstellt. Insbesondere die vor dem Fotodetektor FD angeordnete Zylinderlinse ZL führt Fig.2 entsprechend dazu, daß ein auf dem Fotodetektor FD durch Reflexion vom Informationsträger CD abgebildeter Lichtfleck bei Abweichungen der Position der Objektivlinse OL vom Arbeitspunkt AP bzw. einer Defokussierung in seiner Form derart verändert wird, die eine Fokusregelung ermöglicht. Mit der Zylinderlinse ZL werden Fig.2 entsprechend ein erster Brennpunkt B1 und ein zweiter Brennpunkt B2 gebildet, deren Lichtflecke eine liegend- bzw. stehendelliptische Form auf dem aus vier Fotosegmenten A,B,C,D bestehenden Fodetektor FD abbilden. Der Abstand zwischen der Zylinderlinse ZL und dem Fotodetektor FD ist konstant und die Lage der Brennpunkte B1,B2 wird vom Abstand der Objektivlinse OL zum Informationsträger CD bestimmt. Im Arbeitspunkt AP bzw. bei Fokussierung des Lichtstrahls auf dem Informationsträger CD ist der auf dem Fotodetektor FD abgebildete Lichtfleck kreisförmig. Bei einer Abweichung von der Kreisform bzw. einer Defokussierung werden von den Fotosegmenten A,B,C,D bereitgestellte Signale zur Fokusregelung verwendet und die Objektivlinse OL wieder in Fokusstellung positioniert.

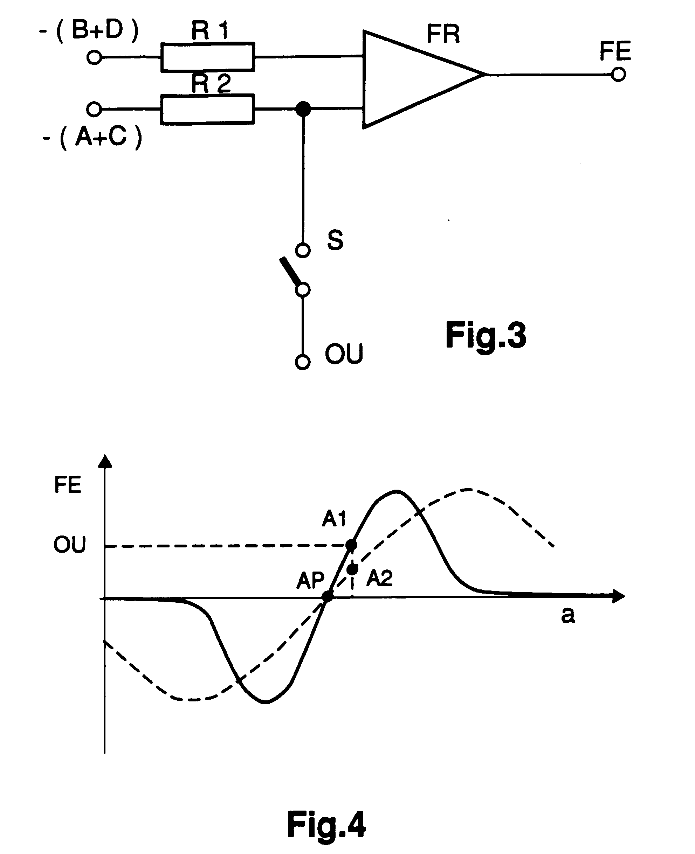

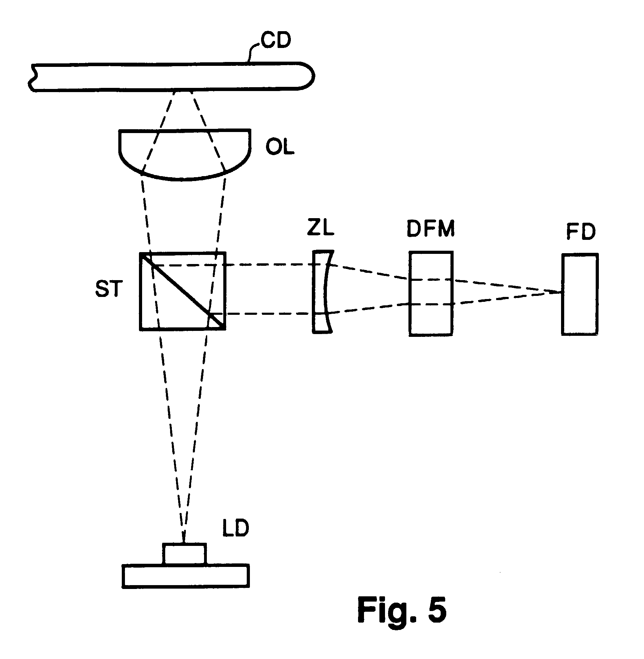

Um in einem Aufzeichnungs- und/oder Wiedergabegerät Informationsträger CD unterschiedlicher Speicherdichte verwenden zu können und insbesondere beim Übergang zu Informationsträgern CD mit höherer Speicherdichte und dadurch bedingter Speicherstrukturen geringerer Abmessungen eine sogenannte Rückwärtskompatibilität zu gewährleisten, wird ein kompatibles Aufzeichnungs- und/oder Wiedergabegerät vorgeschlagen, mit dem durch zielgerichtete Defokussierung und damit verbundener Vergrößerung des Lichtfleckes auf dem Informationsträger CD ein zwischen Speicherstruktur- und Lichtfleckgröße einzuhaltendes Abhängigkeitsverhältnis hergestellt und die Verwendung unterschiedlicher Informationsträger CD in einem Gerät ermöglicht wird. Dabei wird derart verfahren, daß eine an die höchste Speicherdichte zu verwendender Informationsträger CD hinsichtlich Wellenlänge und Lichtfleckgröße angepaßte Lichtquelle verwendet und mit einem Defokussiermittel das auf den Informationsträger CD gerichtete Licht zur Lichtfleckvergrößerung für Informationsträger CD geringerer Speicherdichte defokussiert wird. Bei der Herstellung kompatibler Aufzeichnungs- und/oder Wiedergabegeräte wird eine an die höchste Speicherdichte hinsichtlich Wellenlänge und Lichtfleckgröße angepaßte Lichtquelle verwendet bzw. die Normierung eines Informationsträgers CD mit vergleichsweise höherer Speicherdichte wird sich insbesondere an der durch Verkürzung der Wellenlänge der Lichtquelle bzw. des Lasers LD erreichbaren Verringerung der Lichtfleckgröße orientieren. Um dann beispielsweise in einem CD-Spieler neuer Generation ebenfalls die bisher übliche CD abspielen zu können, wird auf den Strahlengang im kompatiblen Aufzeichnungs- und/oder Wiedergabegerät derart Einfluß genommen, daß eine Defokussierung und damit verbundene Lichtfleckvergrößerung auf dem Informationsträger CD eintritt. Andernfalls wäre mindestens eine andere Laserdiode LD zu verwenden. Gemäß einer in Fig.3 dargestellten bekannten Ausführung wird zur Defokussierung des auf den Informationsträger CD gerichteten Lichtstrahls auf den Strahlengang dadurch eingewirkt, daß eine Offsetspannung OU im Fokusregelkreis zur Anpassung an die Speicherdichte des Informationsträgers CD als Defokussiermittel verwendet wird. Zur Durchführung des Verfahrens wird gemäß Fig.3 an einem Eingang des von einem Differenzverstärker gebildeten Fokusregelverstärkers FR über einen Schalter S eine Offsetspannungsquelle OU angeschlossen, die durch Verschiebung des Arbeitspunktes AP des Fokusregelverstärkers FR als Defokussiermittel wirkt. Dem Fokusregelverstärker FR bzw. dem Differenzverstärker werden in bekannter Weise über einen ersten und einen zweiten Widerstand R1,R2 jeweils Summensignale zweier Fotosegmente A,C bzw. B,D zugeführt und durch Differenzbildung das Fokusfehlersignal FE erzeugt. Durch die dem Fokusfehlersignal FE hinzugefügte Offsetspannung OU wird die den Lichtstrahl fokussierende Objektivlinse OL dann in eine Stellung gebracht, die zu einem vergrößerten Lichtfleck auf dem Informationsträger CD führt. Der vergrößerte Lichtfleck resultiert aus einer Arbeispunktverschiebung im Fokusregelkreis. Die Fokusregelkreiskurve wird von der Darstellung des Fokusfehlersignals FE über den Abstand a der Objektivlinse OL zum Informationsträger CD als sogenannte S-Kurve in Fig.4 in durchgezogener Linie repräsentiert. Es ist ersichtlich, daß eine Erhöhung des Fokusfehlersignals FE um die Offsetspannung OU zu einer Verschiebung des Arbeitspunktes AP in den Arbeitspunkt A1 führt und der Abstand a zwischen Objektivlinse OL und Informationsträger CD vergrößert wird. Aufgrund des vergrößerten Abstandes a zwischen Objektivlinse OL und Informationsträger CD tritt bei Beibehaltung der Brennweite der Objektivlinse OL eine Defokussierung und damit verbundene Lichtfleckvergrößerung auf, die zur Abtastung- und/oder Aufzeichnung von Informationen mit einem Informationsträger CD geringerer Speicherdichte verwendet wird. Einer sich durch die Verschiebung des Arbeitpunktes ergebenden einseitigen Einschränkung des Regelbereiches der Fokusaktuatorregelung kann durch entsprechende Dimensionierung der, die Steilheit der S-Kurve beeinflussenden Zylinderlinse ZL entgegengewirkt werden. Wie eine in Fig.4 in unterbrochener Linienführung dargestellte S-Kurve veranschaulicht, wird eine einseitige Einschränkung des Regelbereiches bei einer S-Kurve mit geringerem Anstieg verringert. Die Arbeitspunkte A1,A2 entsprechen dabei einer äquivalenten Veränderung des Abstandes a zwischen der Objektivlinse OL und dem Informationsträger CD gegenüber dem bei Fokussierung wirksamen Arbeitspunkt AP bzw. Abstand a. Einer erfindungsgemäßen Ausführung entsprechend wird zum Herstellen eines kompatiblen Aufzeichnungs- und/oder Wiedergabegerätes als Defokussiermittel ein die optische Weglänge verlängerndes Mittel im Strahlengang vor dem Fotodetektor FD verwendet. Dieses Mittel kann beispielsweise eine gemäß Fig.5 zwischen Zylinderlinse ZL und Fotodetektor FD angeordnete Glasplatte DFM sein. Infolge der Wirkung des Fokusregelkreises wird ebenfalls eine zur Anpassung an unterschiedliche Informationsspeicherdichten geeignete Defokussierposition der Objektivlinse OL erreicht. Weitere Bezugszeichen in Fig.5 sind äquivalent zu Fig.1 verwendet. Zur Anpassung der Lichtfleckgröße an die Speicherdichte des Informationsträgers CD wird in den Strahlengang zwischen Zylinderlinse ZL und Fotodetektor FD bei Informationsträgern geringerer Speicherdichte eine Glasplatte DMF eingeschwenkt, die die optische Weglänge aufgrund der von der Glasplatte DFM ausgehenden parallelen Versetzung schräg auf die Glaplatte DFM auftreffender Lichtstranien verlängert. Dabei wird aie Dicke der Glasplatte DFM von der erforderlichen Defokussierung bzw. Lichtfleckvergrößerung bestimmt.

Die Anwendung der Erfindung ist nicht auf die hier angegebenen Ausführungen beschränkt sondern generell bei optischen Informationsträgen auf der Basis des angegebenen Prinzips möglich.

## Patentansprüche

1. Verfahren zur Informationswiedergabe von und/oder Aufzeichnung auf optische Informationsträger (CD) unterschiedlicher Informationsspeicherdichte für ein kompatibles Aufzeichnungs- und/oder Wiedergabegerät, das eine für die höchste Speicherdichte hinsichtlich Wellenlänge und Lichtfleckgröße angepaßte Lichtquelle verwendet und der Lichtfleck für eine niedrigere Speicherdichte vergrößert wird, eine Objektivlinse (OL) vorgegebener Brennweite vorgesehen ist, wobei das Licht auf dem Informationsträger (CD) mit einem Fokusregelkreis und der Objektivlinse (OL) fokussiert und das vom Informationsträger (CD) reflektierte Licht mit einem Fotodetektor (FD) zur Signalbereitstellung erfaßt wird, **dadurch gekennzeichnet, daß** eine an die höchste Speicherdichte zu verwendender Informationsträger (CD) hinsichtlich Wellenlänge und Lichtfleckgröße angepaßte Lichtquelle verwendet und zur Lichtfleckvergrößerung für Informationsträger (CD) geringerer Speicherdichte ein die optische Weglänge verlängerndes Mittel zur Defokussierung des auf den Informationsträger (CD) auftreffenden Lichtstrahls im Strahlengang vor dem Fotodetektor eingeführt wird.

2. Verfahren nach Anspruch 1, **dadurch gekennzeichnet, daß** als die optische Weglänge im Strahlengang vor dem Fotodetektor (FD) verlängerndes Mittel eine Glasplatte verwendet wird.

3. Verfahren nach Anspruch 1, **dadurch gekennzeichnet, daß** als die optische Weglänge im Strahlengang vor dem Fotodetektor (FD) verlängerndes Mittel eine Linse verwendet wird.

4. Anordnung zur Informationswiedergabe von und/oder Aufzeichnung auf optische Informationsträger (CD) unterschiedlicher Informationsspeicherdichte für ein kompatibles Aufzeichnungs- und/oder Wiedergabegerät, das eine für die höchste Speicherdichte hinsichtlich Wellenlänge und Lichtfleckgröße angepaßte Lichtquelle verwendet und der Lichtfleck für eine niedrigere Speicherdichte vergrößert wird, eine Objektivlinse (OL) vorgegebener Brennweite vorgesehen ist, wobei das Licht auf dem Informationsträger (CD) mit einem Fokusregelkreis und der Objektivlinse (OL) fokussiert und das vom Informationsträger (CD) reflektierte Licht mit einem Fotodetektor (FD) zur Signalbereitstellung erfaßt wird, **dadurch gekennzeichnet, daß** eine zur höchsten Speicherdichte der Informationsträger (CD) bezüglich Wellenlänge und Lichtfleckgröße kompatible Lichtquelle und ein in den Strahlengang vor dem Fotodetektor (FD) einbringbares, die optische Weglänge verlängerndes Mittel zur Defokussierung des auf den Informationsträger (CD) gerichteten Lichtstrahls zur Anpassung an die Speicherdichte des Informationsträgers (CD) vorgesehen sind.

5. Anordnung nach Anspruch 4, **dadurch gekennzeichnet, daß** das die optische Weglänge verlängernde Mittel zur Defokussierung und Anpassung der Lichtfleckgröße an die Speicherdichte des Informationsträgers (CD) eine im Strahlengang vor dem Fotodetektor (FD) angeordnete Glasplatte (DFM) ist.

6. Anordnung nach Anspruch 4, **dadurch gekennzeichnet, daß** das die optische Weglänge verlängernde Mittel zur Defokussierung und Anpassung der Lichtfleckgröße an die Speicherdichte des Informationsträgers (CD) eine im Strahlengang vor dem Fotodetektor (FD) angeordnete Linse ist.

## Claims

1. Method of reproducing information from and/or recording on optical information carriers (CD) of differing information storage density for a compatible recording and/or reproduction apparatus which uses a light source that is adapted for the highest storage density as regards wavelength and magnitude of the light spot and the light spot being enlarged for a lower storage density, there being provided an objective lens (OL) of predetermined focal length whereby the light is focused on the information carrier (CD) using a focusing control loop and the objective lens (OL) and the light reflected from the information carrier (CD) is captured by a photoelectric detector (FD) for signal preparation purposes, characterised in that, a light source is used that is adapted to the highest storage density information carrier (CD) to be used as regards wavelength and magnitude of the light spot and that, for the purposes of enlarging the light spot for information carriers (CD) of lower storage density, a means for lengthening the length of the optical path is inserted in front of the photoelectric detector in the beam path in order to defocus the light beam incident on the information carrier (CD).

2. Method in accordance with Claim 1, characterised in that, a glass plate is used as the means for lengthening the length of the optical path which is located in front of the photoelectric detector (FD) in the beam path.

3. Method in accordance with Claim 1, characterised in that, a lens is used as the means for lengthening the length of the optical path which is located in front of the photoelectric detector (FD) in the beam path.

4. Arrangement for reproducing information from and/or recording on optical information carriers (CD) of differing information storage density for a compatible recording and/or reproduction apparatus which uses a light source that is adapted for the highest storage density as regards wavelength and magnitude of the light spot and the light spot being enlarged for a lower storage density, there being provided an objective lens (OL) of predetermined focal length whereby the light is focused on the information carrier (CD) using a focusing control loop and the objective lens (OL) and the light reflected from the information carrier (CD) is captured by a photoelectric detector (FD) for signal preparation purposes, characterised in that, there are provided a light source that is compatible with the highest storage density of the information carrier (CD) in respect of the wavelength and magnitude of the light spot and a means for lengthening the length of the optical path, which said means is insertible into the beam path in front of the photoelectric detector (FD) for the purposes of defocusing the light beam directed onto the information carrier (CD) in order to match the storage density of the information carrier (CD).

5. Arrangement in accordance with Claim 4, characterised in that, the means for lengthening the length of the optical path for the purposes of defocusing and matching the magnitude of the light spot to the storage density of the information carrier (CD) is a glass plate (DFM) that is arranged in front of the photoelectric detector (FD) in the beam path.

6. Arrangement in accordance with Claim 4, characterised in that, the means for lengthening the length of the optical path for the purposes of defocusing and matching the magnitude of the light spot to the storage density of the information carrier (CD) is a lens that is arranged in front of the photoelectric detector (FD) in the beam path.

## Revendications

1. Procédé pour la reproduction d'informations et / ou l'enregistrement sur des supports d'informations optiques (CD) de densités de mémorisation d'informations différentes pour un appareil d'enregistrement et / ou de lecture compatible,
où une source de lumière adaptée à la plus haute densité de mémoire en ce qui concerne la longueur d'onde et la grosseur de tache de lumière est utilisée,
et où la tache de lumière est agrandie pour une densité de mémoire plus faible,
où une lentille d'objectif (OL) de distance focale prédéfinie est prévue, de sorte que la lumière sur le support d'informations (CD) soit focalisée avec une boucle de régulation de foyer et la lentille d'objectif (OL) et la lumière réfléchie à partir du support d'informations (CD) interceptée par un photodétecteur (FD) pour la production du signal,
**caractérisé en ce que** une source de lumière adaptée à la plus haute densité de mémoire des supports d'informations (CD) en ce qui concerne la longueur d'onde et la grosseur de tache de lumière est utilisée et
pour l'augmentation de la tache de lumière pour les supports d'informations (CD) de densité de mémoire plus faible un moyen allongeant le parcours optique est introduit dans la marche des rayons devant le photodétecteur pour la défocalisation du rayon lumineux incident sur le support d'informations (CD).

2. Procédé d'après la revendication 1, **caractérisé en ce que** une plaque de verre est utilisée comme moyen allongeant le parcours optique dans la marche des rayons devant le photodétecteur (FD).

3. Procédé d'après la revendication 1, **caractérisé en ce que** une lentille est utilisée comme moyen allongeant le parcours optique dans la marche des rayons devant le photodétecteur (FD).

4. Configuration pour la reproduction d'informations et / ou l'enregistrement sur des supports d'informations optiques (CD) de densités de mémorisation d'informations différentes pour un appareil compatible d'enregistrement et / ou de lecture
où une source de lumière adaptée à la plus haute densité de mémoire en ce qui concerne la longueur d'onde et la grosseur de tache de lumière est utilisée,
et où la tache de lumière est agrandie pour une densité de mémoire plus faible,
où une lentille d'objectif (OL) de distance focale prédéfinie est prévue,
de sorte que la lumière sur le support d'informations (CD) soit focalisée avec une boucle de régulation de foyer et la lentille d'objectif (OL) et la lumière réfléchie à partir du support d'informations (CD) interceptée par un photodétecteur (FD) pour la production d'un signal,
**caractérisée en ce que** une source de lumière compatible à la plus haute densité de mémoire des supports d'informations (CD) en ce qui concerne la longueur d'onde et la grosseur de tache de lumière est prévue, ainsi qu'un moyen allongeant le parcours optique introduisible dans la marche des rayons devant le photodétecteur (FD) pour la défocalisation du rayon lumineux dirigé sur le support d'informations (CD) pour l'adaptation à la densité de mémoire du support d'informations (CD).

5. Configuration d'après la revendication 4, **caractérisée en ce que** le moyen allongeant le parcours optique pour la défocalisation et l'adaptation de la grandeur de la tache de lumière à la densité de mémoire du support d'informations (CD) est une plaque de verre (DFM) disposée dans la marche des rayons devant le photodétecteur (FD).

6. Configuration d'après la revendication 4, **caractérisée en ce que** le moyen allongeant le parcours optique pour la défocalisation et l'adaptation de la grandeur de la tache de lumière à la densité de mémoire du support d'informations (CD) est une lentille disposée dans la marche des rayons devant le photodétecteur (FD).
